# EUROPEAN PATENT APPLICATION

(11) **EP 3 053 721 A1**
(43) Date of publication of application: **10.08.2016**
(21) Application number: 14850213.1
(22) Date of filing: 02.10.2014
(51) Int. Cl.: B28B 3/20, B28B 3/22, B29C 47/12

(54) **EXTRUSION MOLDING DEVICE AND METHOD FOR MANUFACTURING GREEN HONEYCOMB MOLDED BODY**

(30) Priority: 04.10.2013 JP 2013209377
(71) Applicant: Sumitomo Chemical Company Limited, Tokyo 104-8260 (JP)
(72) Inventor: SONODA Masato, Niihama-shi Ehime 792-8521 (JP); MATSUDA Masato, Niihama-shi Ehime 792-8521 (JP); TSUCHIMOTO Kazuya, Niihama-shi Ehime 792-8521 (JP)
(74) Representative: Vossius & Partner Patentanwälte Rechtsanwälte mbB
(86) International application number: PCT/JP2014/076426
(87) International publication number: WO 2015/050214

(57) **Abstract**

An extrusion molding device 1 comprises a first pipe 10, a screw 2B that is provided in the first pipe 10, a second pipe 50 that is connected to the outlet of the first pipe 10, a flow adjustment, plate 20 that is disposed between the first pipe 10 and the second pipe 50, and a die 90 that is connected to the outlet of the second pipe 50. The second pipe 50 includes, in order from the side of the first pipe 10, a first portion 32 having a constant inner diameter, a second portion 34 having an inner diameter that decreases as the second portion 34 extends from the first portion 32, and a third portion 36 having a constant inner diameter. The second portion 34 is undetachably integrated with the first portion 32, and the third portion 36 is undetachably integrated with the second portion 34.

## Description

### Technical Field

The present invention relates to an extrusion molding device and a method for manufacturing a green honeycomb molded body.

### Background Art

Ceramic honeycomb fired bodies have been widely known as diesel particulate filters or the like. The ceramic honeycomb fired body has a structure in which one end sides of some through holes of a honeycomb structure, which includes a large number of through holes, are sealed with a sealing material, and the other end sides of the remaining through holes are sealed with a sealing material. In Patent Literature 1, an extrusion molding device used for manufacturing a green honeycomb honeycomb molded body is disclosed. The device includes a first pipe having a screw, a filtration net, a taper tube, and a die, in this order.

### Citation List

### Patent Literature

[Patent Literature 1] Japanese Unexamined Patent Publication No. 2000-301517

### Summary of Invention

### Technical Problem

Now, in an extrusion molding device such as Patent Literature 1, in order to extrude a green honeycomb molded body in a desired honeycomb geometry, there is a case where it is preferable to provide extension tube portions, the inner diameter of which is constant, at the front and rear of the taper tube.

Then, in the extrusion molding device of such a configuration, in the case of, for example, changing an exterior shape of a green honeycomb molded body to be molded, it is cumbersome to remove the die, the extension tube portion, the resistance tube, and the extension tube portion, from the extrusion molding device, and to fasten thereafter the other extension tube portion, the resistance tube, the extension tube portion, and the die, to the extrusion molding device.

The present invention is made in view of the above problem and has an objective to provide an extrusion molding device that is easy to perform changing operation and a method for manufacturing a green honeycomb molded body using the extrusion molding device.

### Solution to Problem

An extruding device according to the present invention comprises a first pipe, a screw that is provided in the first pipe, a second pipe that is connected to the outlet of the first pipe, a flow adjustment plate that is provided between the first pipe and the second pipe, and a die that is connected to the outlet of the second pipe. The second pipe includes, in order from the side of the first pipe, a first portion having a constant inner diameter, a second portion having an inner diameter that decreases as the second portion extends from the first portion, and a third portion having a constant inner diameter. The second portion is undetachably integrated with the first portion, and the third portion is undetachably integrated with the second portion.

According to the present invention, since the first portion, the second portion, and the third portion are integrated, a detachable mechanism between the first portion and the second portion, and a detachable mechanism between the second portion and the third portion, are dispensed with, the reduction in weight and costs of the second pipe is achieved, and moreover the change of the first portion to the third portion can be quickly performed when the external shape of an extrusion-molded body (e.g., a diameter) is changed.

The inner surface of the second portion may include a slope inclining such that the inner diameter gradually decreases as the second portion extends from an upstream side to a downstream side, and an inclination angle of the inner surface of the second portion with respect to a central axis of the second portion may decrease stepwise as the second portion extends from the upstream side to the downstream side. In this case, composite material can be smoothly led toward the die.

The above extrusion molding device may further comprise a hydraulic clamp or magnet clamp that fastens the second pipe and the first pipe in a detachable manner. In this case, the change of the first portion to the third portion becomes further easier.

In the flow adjustment plate, an inclining through hole may be formed, the inclining through hole inclining with respect to the central axis of a channel that runs from the first pipe toward the second pipe. In this case, at least some of composite material on the upstream side of the flow adjustment plate passes through the inclining through hole of the flow adjustment plate and flows in a direction that inclines with respect to the central axis of the channel, in the downstream side of the flow adjustment plate. By a flow inclining with respect to the central axis of the channel being formed, composite material fluxes are merged with one another in a direction orthogonal to the central axis of the channel. For this reason, it is possible to reduce the variations of the composite material in fluidity in the direction orthogonal to the central axis of the channel.

The inclining through hole may be formed close to a center of the flow adjustment plate. In this case, since the flow inclining with respect to the central axis of the channel occurs in the central portion of the channel, composite material fluxes flowing through the central portion of the channel and composite material fluxes flowing through the periphery of the central portion are merged with one another. In an extrusion molding device, the fluidity of a composite material flux flowing through the central portion of the channel tends to be high as compared with the fluidity of a composite material flux flowing through the periphery of the central portion. Therefore, by mixing the composite material flux flowing through the central portion of the channel and the composite material flux flowing through the periphery of the central portion, it is possible to further reduce the variations of the composite material in fluidity in a direction orthogonal to the central axis of the channel.

The inclining through hole may be formed so as to approach the central axis as extending from one end side toward another end side. In this case, by composite material passing through the inclining through hole, a flow from the central portion of the channel toward the outside or a flow from the outside toward the central portion of the channel is formed. This causes composite material fluxes flowing through the central portion of the channel and composite material fluxes flowing through the periphery of central portion to be further better mixed with one another, and thus it is possible to further reduce the variations of the composite material in fluidity in a direction orthogonal to the central axis of the channel.

In the flow adjustment plate, a plurality of inclining through holes including the inclining through hole may be formed, some of the inclining through holes may be formed so as to approach the central axis as extending from an upstream side toward a downstream side, and others of the inclining through holes may be formed so as to approach the central axis as extending from the downstream side toward the upstream side. In this case, by the composite material fluxes flowing through the inclining through holes, both of the flows from the central portion of the channel toward the outside and flows from the outside toward the central portion of the channel are formed. This causes composite material fluxes flowing through the central portion of the channel and composite material fluxes flowing through the periphery of central portion to be further better mixed with one another, and thus it is possible to further reduce the variations of the composite material in fluidity in a direction orthogonal to the central axis of the channel.

The flow adjustment plate may include a main member that has an opening at a center, and a core member that is disposed in the opening, and the inclining through hole may be formed in the core member. In this case, for example, a plurality of core members can be prepared that differ in inner diameter, number, disposition, or inclining direction of inclining through holes, and can be changed as appropriate in conformity with the composition or the like of composite material. For this reason, it is possible to further reduce the variations of the composite material in fluidity in a direction orthogonal to the central axis of the channel.

The flow adjustment plate may include a plurality of stacked plates that are stacked along a central axis of a channel running from the first pipe toward the second pipe, in each of the stacked plates, a plurality of through holes may be formed, and the through holes in each of the stacked plates may be connected to a plurality of the through holes that are formed in the stacked plate adjacent to the each of the stacked plates. In this case, at least some of composite material on the upstream side of the flow adjustment plate passes through the through holes of the stacked plates. The through holes of each stacked plate are connected to a plurality of through holes of an adjacent stacked plate. At locations where a through hole on the upstream side is connected to a plurality of through holes on the downstream side, a composite material flux flowing out from the one through hole is separated and flows into the plurality of through holes. At locations where a through hole on the downstream side is connected to a plurality of through holes on the upstream side, composite material fluxes flowing out from the plurality of through holes flow into the one through hole and are merged with one another. In such a manner, the separation and merging of composite material occur in the course of passing through the plurality of stacked plates, which causes composite material fluxes to be mixed with one another in directions orthogonal to the central axis of the channel. For this reason, it is possible to reduce the variations of composite material in fluidity in the directions orthogonal to the central axis of the channel.

Each of the stacked plates may be disposed at a center of the flow adjustment plate. In this case, the separation and merging of the composite material occur in the central portion of the channel, and thus composite material fluxes flowing through the central portion of the channel and composite material fluxes flowing through the periphery of the central portion are merged with one another. In an extrusion molding device, the fluidity of a composite material flux flowing through the central portion of the channel tends to be high as compared with the fluidity of a composite material flux flowing through the periphery of the central portion. Therefore, by mixing the composite material flux flowing through the central portion of the channel and the composite material flux flowing through the periphery of the central portion, it is possible to further reduce the variations of the composite material in fluidity in a direction orthogonal to the central axis of the channel.

The plurality of stacked plates may include a stacked plate on an upstream side, a stacked plate on a downstream side, and a middle stacked plate that is disposed between the stacked plates on the upstream side and the downstream side, the through holes formed in the stacked plate on the downstream side may be connected to a plurality of the through holes that are formed closest to a center side and closest to an outer edge side of the stacked plate on the upstream side, via the through holes formed in the middle stacked plate. In this case, composite material fluxes flowing into the through hole that are formed closest to the center side of the stacked plate on the upstream side and composite material fluxes flowing into the through holes that are formed closest to the outer edge side of the stacked plate on the upstream side flow into one through hole of the stacked plate on the downstream side and are merged with one another. This causes composite material fluxes flowing through the central portion of the channel and composite material fluxes flowing through the periphery of the central portion to be further better mixed with one another. Therefore, it is possible to further reduce the variations of the composite material in fluidity in a direction orthogonal to the central axis of the channel.

The flow adjustment plate may include a main member that has an opening at a center, and a core member that is disposed in the opening, and the plurality of stacked plates may form the core member. In this case, for example, a plurality of core members can be prepared that differ in number of stacked plates, or in inner diameter, number, or disposition of the through holes of each stacked plate, and can be changed as appropriate in conformity with the composition or the like of composite material. For this reason, it is possible to further reduce the variations of the composite material in fluidity in a direction orthogonal to the central axis of the channel.

The plurality of stacked plates may include a stacked plate on an upstream side, a stacked plate on a downstream side, and a middle stacked plate that is disposed between the stacked plates on the upstream side and the downstream side, and in the middle stacked plate, the through holes may be formed that are smaller in inner diameter and larger in number as compared with the through holes of the stacked plates on the upstream side and the downstream side. In this case, the separation and merging of the composite material occur at more spots, which causes composite material fluxes to be further better mixed with one another in the directions orthogonal to the central axis of the channel. Therefore, it is possible to further reduce the variations of the composite material in fluidity in a direction orthogonal to the central axis of the channel.

The second pipe may further include a fourth portion that is positioned on a downstream side of the third portion, and in the fourth portion, a rod that projects from an inner surface of the fourth portion toward a center side, and an actuator that adjusts a projecting length of the rod from the inner surface of the fourth portion, may be provided. In this case, by adjusting the projecting lengths of the rods 74, it is possible to adjust the distribution of flow rate in the channel of the fourth portion so as to suppress the flexure of a molded body extruded from the die.

A method for manufacturing a green honeycomb molded body according to the present invention includes a step of extruding a ceramic material using an extrusion molding device, to obtain the green honeycomb molded body. The extrusion molding device is the above-described extrusion molding device.

### Advantageous Effects of Invention

According to the present invention, an extrusion molding device that is easy to perform changing operation and a method for manufacturing a green honeycomb molded body using the extrusion molding device are provided.

### Brief Description of Drawings

[Figure 1] Figure 1(a) is a perspective view illustrating an example of a green honeycomb molded body, and Figure 1(b) is a partially enlarged view of the green honeycomb molded body.
[Figure 2] Figure 2 is a schematic cross sectional view illustrating a first embodiment of an extrusion molding device.
[Figure 3] Figure 3 is an enlarged cross sectional view illustrating a distal end portion of a first pipe and a second pipe in Figure 2.
[Figure 4] Figure 4(a) and Figure 4(b) are perspective views illustrating operating states of a hydraulic clamp 60.
[Figure 5] Figure 5 is a cross sectional view for illustrating a process of removing a second pipe 50 from a first pipe 10.
[Figure 6] Figure 6 is a schematic cross sectional view illustrating a second embodiment of the extrusion molding device.
[Figure 7] Figure 7 is a schematic cross sectional view illustrating a third embodiment of the extrusion molding device.
[Figure 8] Figure 8 is a left side view of a main member in Figure 7.
[Figure 9] Figure 9 is an enlarged view of a core member in Figure 7.
[Figure 10] Figure 10 is a right side view of the core member in Figure 7.
[Figure 11] Figure 11 is a left side view of the core member in Figure 7.
[Figure 12] Figure 12 is a cross sectional view taken along the line XII-XII in Figure 10.
[Figure 13] Figure 13 is a cross sectional view taken along the line XIII-XIII in Figure 10.
[Figure 14] Figure 14 is a cross sectional view taken along the line XIV-XIV it Figure 10.
[Figure 15] Figure 15 is a cross sectional view taken along the line XV-XV in Figure 10.
[Figure 16] Figure 16 is a schematic cross sectional view illustrating a fourth embodiment of the extrusion molding device.
[Figure 17] Figure 17 is a left side view of a stacked plate that is the closest to a downstream side in Figure 16.
[Figure 18] Figure 18 is a left side view of a stacked plate that is the second closest to the downstream side in Figure 16.
[Figure 19] Figure 19 is a left side view of a stacked plate that is the third closest to the downstream side in Figure 16.
[Figure 20] Figure 20 is a left side view of a stacked plate that is the fourth closest to the downstream side in Figure 16.
[Figure 21] Figure 21 is a left side view of a stacked plate that is the closest to an upstream side in Figure 16.

### Description of Embodiments

Hereinafter, embodiments will be described in detail with reference to the accompanying drawings. First, a green honeycomb molded body will be described prior to the description of an extrusion molding device according to the present invention.

### <Green Honeycomb Molded Body>

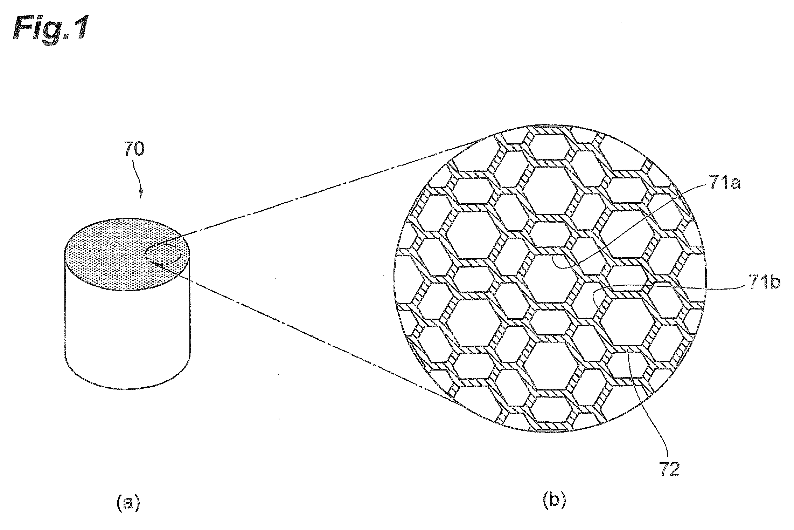

A green honeycomb molded body 70 illustrated in Figure 1 is acquired by subjecting a composite material to extrusion molding using the extrusion molding device to be described later. As illustrated in Figure 1(a), the green honeycomb molded body 70 is a cylinder. The green honeycomb molded body 70 includes a plurality of through holes 71a. and 71b that are substantially parallel to each other and have different cross-sectional shapes. The plurality of through holes 71a and 71b are formed by a partition wall 72 that extends substantially parallel to the central axis of the green honeycomb molded body 70. The through holes 71 a each have a regular hexagon as the cross-sectional shape thereof. In contrast, the through holes 71b each have a wide hexagon as the cross-sectional shape thereof, and six through holes 71b surround one through hole 71 a. The plurality of through holes are in an equilateral triangular disposition in the end face of the green honeycomb molded body 70, that is, central axes of the through holes 71 a and 71b are disposed so as to be positioned at the vertices of an equilateral triangle. The size of the equilateral triangle can be determined such that each of the sides thereof is, for example, 3.5 to 6 mm. Note that a honeycomb structure can be produced by firing the green honeycomb molded body 70 at a predetermined temperature. The honeycomb structure is used as, for example, a filter for purifying gas exhausted from an internal combustion engine.

The length of the green honeycomb molded body 70 in a direction in which the through holes 71a and 71b extend is not specially limited, and can be, for example, 40 to 350 mm. In addition, the outer diameter of the green honeycomb molded body 70 is not specially limited, either, and can be, for example, 100 to 320 mm.

The composite material that makes up the green honeycomb molded body 70 is not specially limited and contains an inorganic compound source powder being a ceramic material, an organic binder such as a methyl cellulose, and an additive that is added as needed. From the viewpoint of high-temperature tolerance of a honeycomb fired body, preferred ceramic materials include an oxide such as an alumina, silica, mullite, cordierite, glass, and aluminum titanate, a silicon carbide, a silicon nitride, and the like. Note that the aluminum titanate can further contain a magnesium and/or a silicon.

For example, in the case of producing a green honeycomb molded body made of an aluminum titanate, the inorganic compound source powder contains an aluminum source powder such as an α alumina powder, and an titanium source powder such as an anatase-type or rutile-type titania powder, and can further contain, as needed, a magnesium source powder such as a magnesia powder and magnesia spinel powder, and/or a silicon source powder such as a silicon oxide powder and glass frit.

Organic binders include celluloses including a methyl cellulose, carboxymethyl cellulose, hydroxyalkyl methyl cellulose, carboxymethyl cellulose sodium, and the like; alcohols including a polyvinyl alcohol and the like; and a lignin sulfonate.

Additives include, for example, a pore forming agent, lubricant and plasticizer, dispersant, and solvent.

Pore forming agents include a carbon material such as a graphite; resins including a polyethylene, polypropylene, polymethyl methacrylate; a vegetable material such as a starch, nut shell, walnut shell, and corn; an ice; a dry ice, and the like.

Lubricants and plasticizers include alcohols including a glycerin; a higher fatty acid such as a caprylic acid, lauric acid, palmitic acid, arachidic acid, oleic acid, and stearic acid; a metal stearate such as an aluminum stearate, a polyoxyalkylene alkyl ether (POAAE), and the like.

Dispersants include, for example, an inorganic acid such as a nitric acid, hydrochloric acid, and sulfuric acid; an organic acid such as an oxalic acid, citric acid, acetic acid, malic acid, and lactic acid; alcohols including a methanol, ethanol, propanol, and the like; a surfactant such as an ammonium polycarboxylate, polyoxyalkylene alkyl ether, and the like.

As a solvent, for example, alcohols including a methanol, ethanol, butanol, propanol, and the like; glycols including a propylene glycol, polypropylene glycol, ethylene glycol, and the like; a water, and the like can be used.

### <Extrusion Molding Device According to First Embodiment>

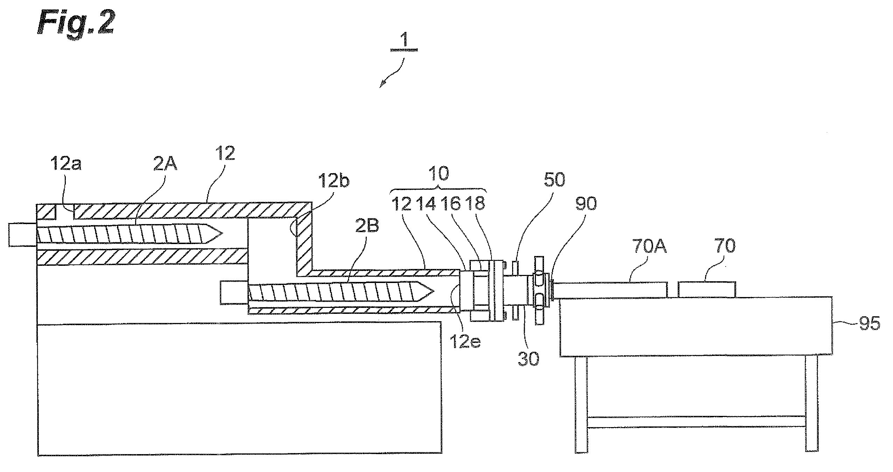

An example of an extrusion molding device according to a first embodiment will be described with reference to Figure 2 to Figure 5. An extrusion molding device 1 illustrated in Figure 2 to Figure 5 is a device for producing a green honeycomb molded body 70 from a composite material in a powder form or a paste form.

The extrusion molding device 1 mainly includes a first pipe 10, a second pipe 50 that is connected to the outlet of the first pipe 10, a flow adjustment plate 20 that is provided between the first pipe 10 and the second pipe 50, a die 90 that is connected on the downstream side of the second pipe 50, and screws 2A and 2B that are provided in the first pipe 10.

The first pipe 10 includes, in the order from the upstream side thereof, a barrel portion 12, an extended portion 14, a tapered portion 16, and an adjustment plate fixing section 18.

The screw 2A is provided in the upper tier of the barrel portion 12, and the screw 2B is provided in the lower tier of the barrel portion 12. The screws 2A and 2B knead composite material that is supplied from an inlet 12a of the barrel portion 12 and transfer the composite material to an outlet 12e of the barrel portion 12 through a channel 12b.

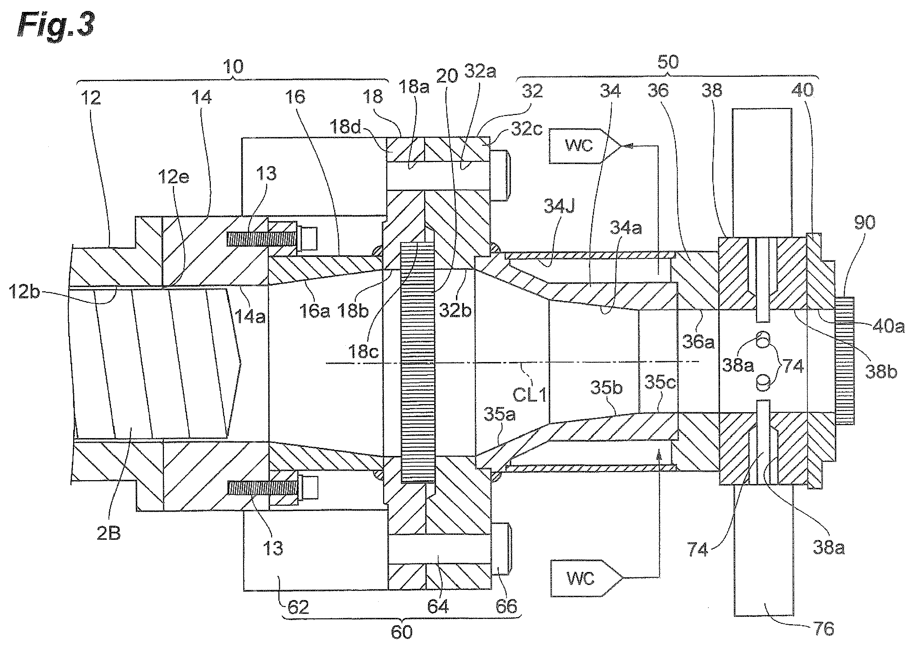

As illustrated in Figure 3, in the extended portion 14, a channel 14a is formed that runs to the channel 12b. The inner diameter of the channel 14a is constant. The inner diameter of the extended portion 14 is, for example, the same as the inner diameter of the outlet 12e of the barrel portion 12. In Figure 3, the distal end portion of the screw 2B is positioned in the extended portion 14 but is not limited to this position.

In the tapered portion 16, a channel 16a is formed that runs to the channel 14a. The inner diameter of the channel 16a increases as the channel 16a extending from the barrel portion 12. The inner diameter of the tapered portion 16 on the upstream side thereof is, for example, the same as the inner diameter of the channel 14a.

In the adjustment plate fixing section 18, a channel 18b is formed that runs to the channel 16a. On the downstream side of the adjustment plate fixing section 18, in the circumferential portion of the channel 18b, a recessed portion 18c is formed that houses the circumferential portion of the flow adjustment plate 20. On the outer circumference of the adjustment plate fixing section 18, a flange portion, 18d is formed.

The extended portion 14 and the tapered portion 16 are fastened to each other by bolts 13, and the tapered portion 16 and the adjustment plate fixing section 18 are fastened to each other by welding. Although not illustrated, the barrel portion 12 and the extended portion 14 are fastened to each other by a bolt.

The second pipe 50 includes, in the order from the upstream side thereof (a first pipe 10 side), a first portion 32, a second portion 34, a third portion 36, a fourth portion 38, and a fifth portion 40.

In the first portion 32, a channel 32b is formed that runs to the channel 18b. The inner diameter of the channel 32b is, for example, the same as the inner diameter of the channel 18b. The length of the channel 32b can be, for example, 50 to 100 mm. The first portion 32 has a function of the connection with an upstream portion. On the outer circumference of the first portion 32, a flange portion 32c is formed that overlaps with the flange portion 18d of the first pipe 10.

A channel 34a of the second portion 34 has an inner diameter that decreases as the channel 34a extends from an upstream side to a downstream side. Specifically, the inner surface of the channel 34a includes a slope inclining such that the inner diameter gradually decreases as the channel 34a extends from the upstream side to the downstream side. The inclination angle of the inner surface of the channel 34a with respect to a central axis CL1 of the channel 34a decreases stepwise as the channel 34a extends from the upstream side to the downstream side. For example, the inner surface of the channel 34a is divided into three regions 35a, 35b, and 35c that are arranged from the upstream side to the downstream side. The inclination angle of the region 35a with respect to the central axis CL1 is larger than the inclination angle of the region 35b with respect to the central axis CL1. The inclination angle of the region 35b with respect to the central axis CL1 is larger than the inclination angle of the region 35c with respect to central axis CL1. The inclination angle of the region 35c with respect to the central axis CL1 is substantially 0°. That is, the region 35c does not incline with respect to the central axis CL1.

The channel 34a runs to the channel 32b, and the inner diameter of the channel 34a on the upstream side thereof is, for example, the same as the inner diameter of the channel 32b. It is preferable that the inner diameter of the channel 34a on the downstream side thereof is smaller than the inner diameter of the channel 12b of the barrel portion 12. It is preferable that the inner diameter of the channel 34a on the downstream side thereof is 60 to 100% of the inner diameter of the channel 12b. It is preferable that the length of the channel 34a is, for example, 100 to 200 mm. It is preferable that the inclination angle of the inner surface of the channel 34a with respect to the central axis CL1 is 0 to 40°. The channel 34a has a function of flow amount adjustment of the composite material in a paste form.

In the third portion 36, a channel 36a is formed that runs to the channel 34a. The inner diameter of the channel 36a is constant and, for example, the same as the inner diameter of the channel 34a on the downstream side thereof. The length of the channel 36a is, for example, 50 to 150 mm. The channel 36a has a function of flow amount adjustment of the composite material in a paste form.

The first portion 32 is welded to the second portion 34, and the third portion 36 is welded to the second portion 34. The welding method is not specially limited, and brazing, arc welding, or the like can be employed. Spots to be welded are not specially limited, either. Furthermore, the fastening method for the first portion 32 and the second portion 34, and the fastening method for the second portion 34 and the third portion 36 are not limited to welding. The first portion 32 and the second portion 34, and the second portion 34 and the third portion 36 may be undetachably integrated. Being undetachably integrated means that the integrated thing cannot be separated unless a fastened section is broken. The other examples of being undetachably integrated include a manner in which the first portion 32 and the second portion 34, and the second portion 34 and the third portion 36 are integrally formed from the same material.

On the outer circumference of the second portion 34, a jacket structure 34J is formed, and cooling medium such as cooling water can be supplied to the jacket structure 34J.

Between the adjustment plate fixing section 18 of the first pipe 10 and the first portion 32 of the second pipe 50, the flow adjustment plate 20 is disposed so as to partition off the channel 18b and the channel 32b. The flow adjustment plate 20 is sandwiched by the adjustment plate fixing section 18 and the first portion 32, and the circumferential portion of the flow adjustment plate 20 is housed in the recessed portion 18c. The flow adjustment plate 20 is also referred to as a current plate, including a large number of through holes that penetrate therethrough in a flowing direction. By adjusting the positions and the size of the through holes, it is possible to control the flow behavior of the composite material in the second pipe 50. In addition, foreign objects can be removed by the flow adjustment plate 20. The diameter of the through holes is, for example, 1 to 10 mm.

The flow adjustment plate 20 has an outer diameter that is larger than the inner diameter of the channels 18b and 32b of the adjustment plate fixing section 18 and the first portion 32, and a central portion of the flow adjustment plate 20 partitions off the channel 18b and the channel 32b. The flow adjustment plate 20 is sandwiched by the adjustment plate fixing section 18 and the first portion 32 so as to be attached to the first pipe 10 and the second pipe 50 in a detachable manner.

It is preferable that the flow adjustment plate 20 is a structure that hardly deforms even when pressure is applied thereto from the upstream side thereof. From such a viewpoint, it is preferable that the material of the flow adjustment plate 20 is, for example, a carbon steel or the like. Examples of a preferable material other than the carbon steel include a special steel that contains a nickel, chromium, tungsten, or the like. It is preferable from the viewpoint of securing a sufficient strength that the thickness of the flow adjustment plate 20 is 10 to 100 mm.

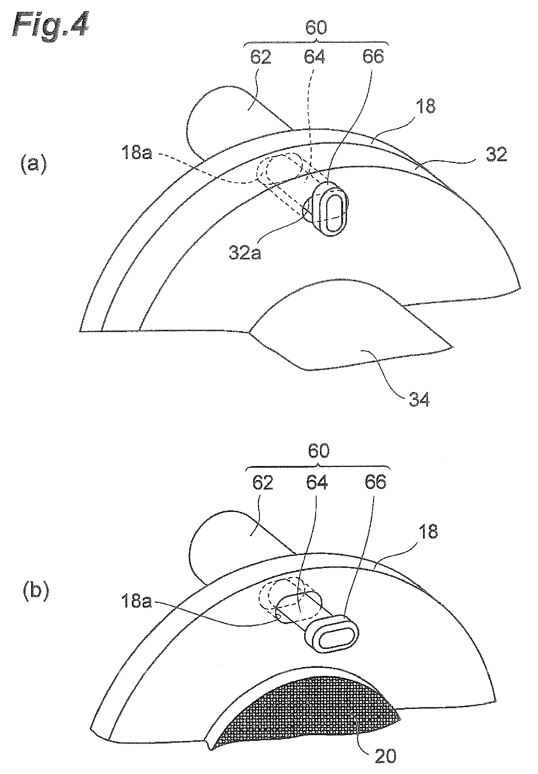

The first pipe 10 and the second pipe 50 are detachably coupled to each other by, for example, hydraulic clamps 60. As illustrated in Figure 3 and Figure 4, the hydraulic clamp 60 includes a cylinder actuator 62, a rod 64, and a locking section 66. The cylinder actuator 62 is disposed so as to sandwich the flange portion 18d in cooperation with the flange portion 32c, and fixed to the flange portion 18d. The rod 64 projects from the cylinder actuator 62 so as to penetrate the flange portions 18d and 32c. The locking section 66 is formed at an end portion of the rod 64, overhanging from the outer circumference of the rod 64. When viewed from the distal end side of the rod 64, the locking section 66 has a shape that extends in one direction. In the extending direction of the locking section 66, the overhang amount of the locking section 66 with respect to the outer circumference of the rod 64 is large as compared with the direction orthogonal to the extending direction of the locking section 66. In the flange portions 18d and 32c, through holes 18a and 32a are formed, respectively, the through holes 18a and 32a being in the cross-sectional shape corresponding to the shape of the locking section 66. The cylinder actuator 62 can cause the rod 64 and the locking section 66 to reciprocate along the axis of the rod 64, and to rotate about the axis of the rod 64.

To couple the first pipe 10 and the second pipe 50 to each other, the locking section 66 is inserted into the through holes 18a and 32a. Causing the locking section 66 to rotate using the cylinder actuator 62 brings about the state that, as illustrated in Figure 4(a), the locking section 66 is caught on the edge of the through hole 32a when viewed from a distal end portion. The cylinder actuator 62 pulls the locking section 66. Then, the flange portions 18d and 32c are sandwiched by the cylinder actuator 62 and the locking section 66, causing the second pipe 50 to be fastened to the first pipe 10.

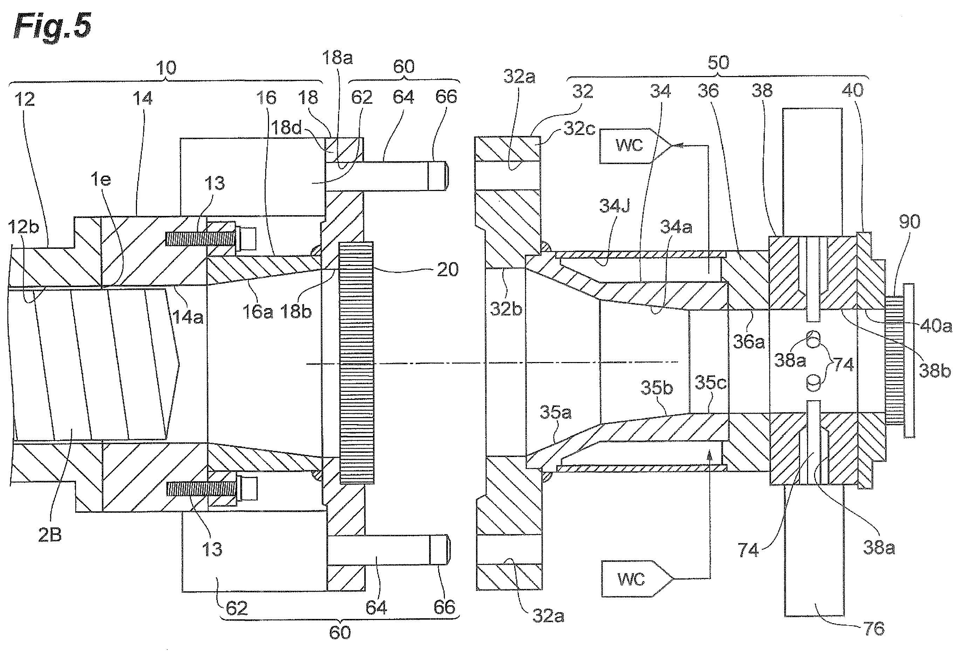

To separate the first pipe 10 from the second pipe 50, the locking section 66 is moved away from the cylinder actuator 62. Causing the locking section 66 to rotate using the cylinder actuator 62 brings about the state that, as illustrated in Figure 4(b), the locking section 66 is aligned with the through holes 18a and 32a when viewed from the distal end portion. This brings about the state that the locking section 66 is able to be inserted into the through holes 18a and 32a again, and as illustrated in Figure 5, the first pipe 10 can be separated from the second pipe 50.

Referring back to Figure 3, the fourth portion 38 includes a channel 38b that runs to the channel 36a, and a plurality of through holes 38a that communicates between the inside and the outside of the channel 38b. The through holes 38a are disposed so as to be positioned around the channel 38b. The fourth portion 38 is provided with a plurality of rods 74 and a plurality of cylinder actuators 76 that move the plurality of rods 74, respectively, in the longitudinal directions thereof. The plurality of rods 74 are inserted through the plurality of through holes 38a, respectively, from the outside of the fourth portion 38, and the distal end portions of the plurality of rods 74 project from the inner surface of the channel 38b toward the center of the channel 38b. The cylinder actuators 76 are fixed to the outside of the fourth portion 38. By causing the rods 74 to move using the cylinder actuators 76, the projecting lengths of the rods 74 from the inner surface of the channel 38b are adjusted. By adjusting the projecting lengths of the rods 74, it is possible to adjust the distribution of flow rate in the channel 38b so as to suppress the flexure of a molded body extruded from the die 90. The length of the channel of the fourth portion 38 is, for example, 100 to 200 mm.

In the fifth portion 40, a channel 40a is formed that runs to the channel 38b. The inner diameter of the channel 40a is constant and, for example, the same as the inner diameter of the channel 38b. The length of the channel of the fifth portion 40 is, for example, 20 to 300 mm. On the downstream side of the channel 40a, the die 90 is provided. The die 90 is for shaping the composite material to obtain the molded body 70 in the shape illustrated in Figure 1, including a latticed channel that corresponds to this shape (not illustrated).

The material of the second pipe 50 is not specially limited, and a metallic material such as an iron, and stainless can be used. It is preferable that the inner surface of the channel of the second pipe 50 includes a tungsten carbide layer so as to suppress abrasion. The tungsten carbide layer can be formed by a thermal spraying method.

### <Method for Manufacturing Green Honeycomb Molded Body>

Next, a method for manufacturing the green honeycomb molded body 70 using the extrusion molding device 1 will be described. First, a composite material is fed from the inlet 12a into the channel 12b. By operating the screws 2A and 2B, the composite material is kneaded and transferred to the outlet 12e on the downstream side of the first pipe 10. The kneaded material is caused to pass through the plurality of through holes of the flow adjustment plate 20 for the adjustment of flow rate distribution such as the unification of flow rate distribution, and thereafter fed to the die 90 through the second pipe 50. The linear velocity of the composite material on the downstream side of the die 90 can be 10 to 150 cm/min.

The composite material is extruded from the die 90, and the molded body 70A, is collected on a support table 95. By cutting the molded body 70A into pieces of a predetermined length, green honeycomb molded bodies 70 are obtained. As seen from the above, this method includes the process of extruding ceramic material using the extrusion molding device 1 to obtain the green honeycomb molded body 70. By sealing one or the other end of the through holes of the green honeycomb molded body 70 and thereafter firing the green honeycomb molded body 70, a honeycomb structure (a honeycomb filter) is obtained.

In order to obtain a green honeycomb molded body 70 in a different external shape, as illustrated in Figure 5, the hydraulic clamp 60 is driven to release the fastening of the first pipe 10 and the second pipe 50, and the second pipe 50 is separated from the first pipe 10. Next, the other second pipe 50 may be coupled to the first pipe 10, and thereafter the die 90 may be attached to the second pipe 50. The other second pipes 50 include one, for example, of which the degree of tapering of the second portion 34 and/or the inner diameter of the third portion 36 to the fifth portion 40 is different from that of the original second pipe 50. Note that when the second pipe 50 is detached from the first pipe 10, the die 90, the fifth portion 40, and the fourth portion 38 may be detached from the third portion 36 in advance. In addition, similarly, when the other second pipe 50 is fastened to the first pipe 10, the fourth portion 38, the fifth portion 40, and the die 90 does not have to be fastened to the other second pipe 50 in advance.

According to the present embodiment, since the first portion 32, the second portion 34, and the third portion 36 of the second pipe 50 are fastened to each other by welding, the attachment/detachment of the second pipe 50 to/from the first pipe 10 is easy, and furthermore weight reduction is possible.

### <Extrusion Molding Device According to Second Embodiment>

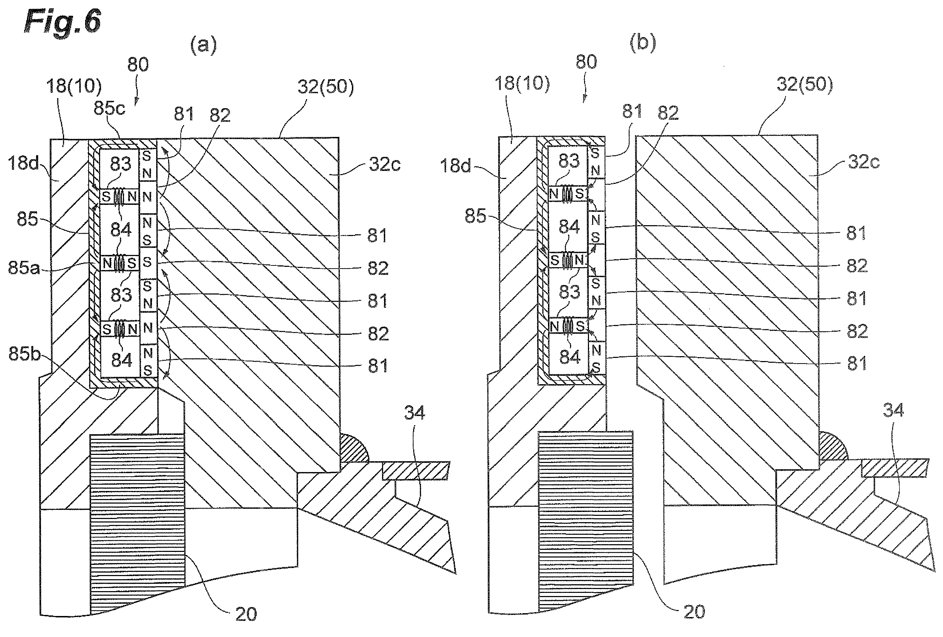

Subsequently, an extrusion molding device according to a second embodiment will be described with reference to Figure 6. What the extrusion molding device according to the present embodiment differs from the extrusion molding device according to the first embodiment is only the coupling structure of the first pipe 10 and the second pipe 50. More in detail, this extrusion molding device 1 includes a magnet clamp 80 in place of the hydraulic clamp 60. The magnet clamp 80 is fixed to the flange portion 18d of the first pipe 10 so as to face the flange portion 32c of the second pipe 50.

The magnet clamp 80 includes a back core 85, a plurality of hard magnetic bodies 81, a plurality of hard magnetic bodies 83, and a plurality of soft magnetic bodies 82. The back core 85 is formed by a bottom portion 85a along the flange portion 18d, and wall portions 85b and 85c that project from the bottom portion 85a toward a flange portion 32c side, on an inner circumference side and an outer circumference side of the flange portion 18d, respectively. The back core 85 has soft magnetism. The plurality of hard magnetic bodies 81 and the soft magnetic bodies 82 are disposed between the wall portions 85b and 85c and alternately arranged along a surface opposite the bottom portion 85a. The hard magnetic bodies 81 form permanent magnets. The hard magnetic bodies 81 sandwiching the soft magnetic bodies 82 are disposed in such a manner that the same poles of the hard magnetic bodies 81 face each other across a soft magnetic body 82. The hard magnetic bodies 83 are put between the bottom portion 85a of the back core 85 and the soft magnetic bodies 82. In the hard magnetic bodies 83, coils 84 are provided that inverse the poles of the hard magnetic bodies 83. Note that examples of the hard magnetic body 81 include a neodymium magnet. Examples of the hard magnetic body 83 include an Alnico magnet. Examples of the soft magnetic body 82 include an iron. The flange portion 32c of the second pipe 50 is formed of a soft magnetic material, such as an iron, a martensitic stainless, and a ferritic stainless, which are attractable by a magnet.

When current is caused to flow through the coils 84, and by magnetic flux generated from the coils 84, the orientations of the poles of the hard magnetic bodies 83 are made as illustrated in Figure 6(a), that is, such that the pole of each hard magnetic body 83 facing each soft magnetic body 82 is the same as the pole of the hard magnetic body 81 facing the each soft magnetic body 82, magnetic fluxes from the soft magnetic bodies 82 passes through the flange portion 32c, which causes the flange portion 32c to be attracted to the magnet clamp 80. This state is kept even when the current through the coils 84 is stopped.

In contrast, when current in the reverse direction is caused to flow through the coils 84 and by magnetic flux generated from the coils 84, the orientations of the poles of the hard magnetic bodies 83 are made as illustrated in Figure 6(b), that is, such that the pole of each hard magnetic body 83 facing each soft magnetic body 82 is the reverse of the pole of the hard magnetic body 81 facing the each soft magnetic body 82, magnetic fluxes between the hard magnetic bodies 81 and the hard magnetic bodies 83 passes through the soft magnetic bodies 82, and there are few magnetic fluxes passing through the flange portion 32c. Therefore, the flange portion 32c is not attracted to the magnet clamp 80. This state is kept even when the current through the coils 84 is stopped.

### <Extrusion Molding Device According to Third Embodiment>

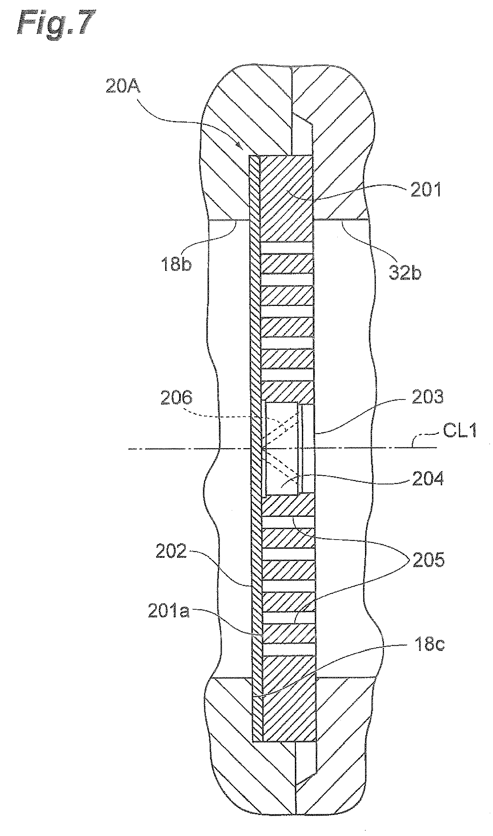

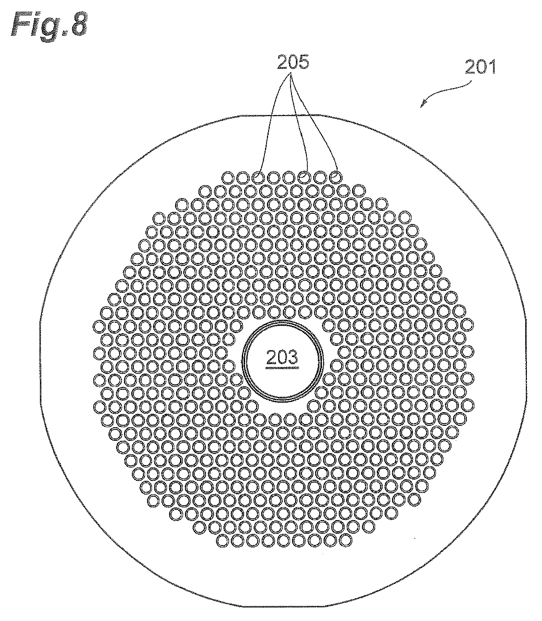

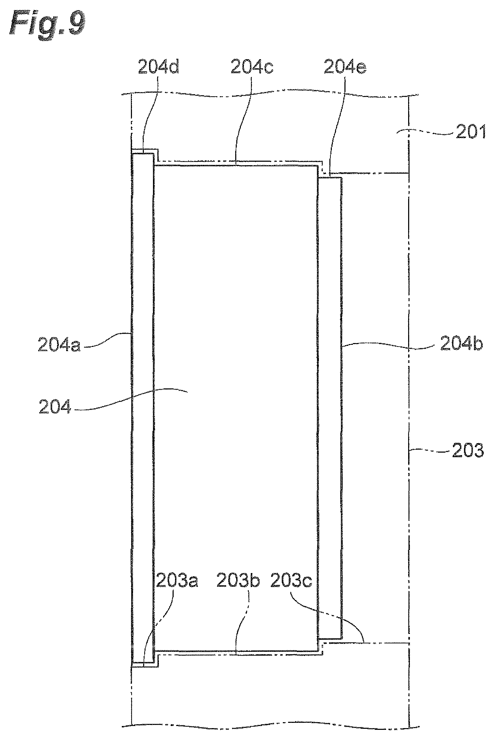

Subsequently, an extrusion molding device according to a third embodiment will be described. As illustrated in Figure 7 and Figure 8, the extrusion molding device according to the present embodiment is one in which the flow adjustment plate 20 is replaced with a flow adjustment plate 20A, so as to achieve a further uniformity of flow rate between the central portion and the periphery of the channel. The flow adjustment plate 20A includes a main member 201, a sheet member 202, and a core member 204. The main member 201 assumes a disk shape the center of which has an opening 203. The main member 201 is formed with a plurality of through holes 205 that are parallel to the central axis CL1 of the channels 18b and 32b. The opening 203 is formed by hole portions 203a, 203b, and 203c that run from an upstream side to a downstream side (see Figure 9). The inner diameter of the hole portion 203a on the upstream side is larger than the inner diameter of the hole portion 203b in the middle, and the inner diameter of the hole portion 203c on the downstream side is smaller than the inner diameter of the hole portion 203b. The sheet member 202 is disposed on the upstream side of the main member 201, covering a surface 201a on the upstream side of the main member 201. The sheet member 202 is formed with a net (not illustrated) through which the composite material is caused to pass.

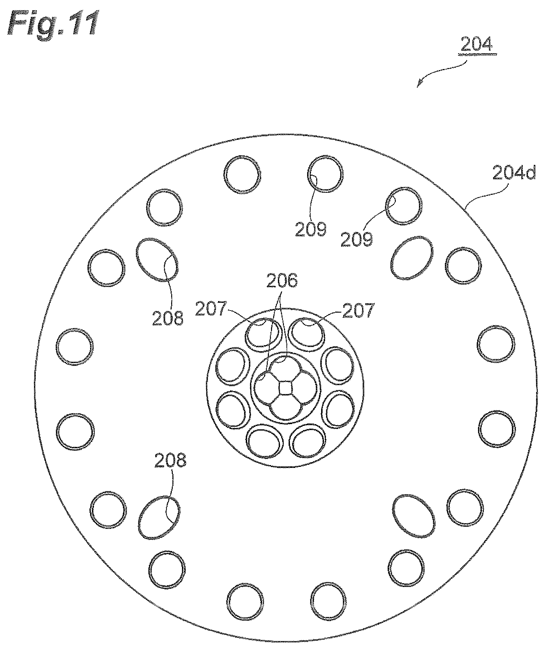

As illustrated in Figure 9 to Figure 11, the core member 204 assumes a disk shape with a plane 204a facing the upstream side and a plane 204b facing the downstream side and is disposed in the opening 203 of the main member 201. The core member 204 includes a fitted portion 204c that is fitted to the hole portion 203b of the opening 203, a large-diameter portion 204d that is adjacent to the fitted portion 204c on a plane 204a side, and a small-diameter portion 204e that is adjacent to the fitted portion 204c on a plane 204b side. The large-diameter portion 204d, which is large in outer diameter as compared with the fitted portion 204c, is housed in the hole portion 203a on the upstream side of the opening 203. The small-diameter portion 204e, which is small in outer diameter as compared with the fitted portion 204c, is inserted into the hole portion 203c on the downstream side of the opening 203.

By the fitted portion 204c being fitted to the hole portion 203b, the position of the core member 204 in a direction orthogonal to the central axis CL1 is determined. By the large-diameter portion 204d being caught on the boundary portions of the hole portions 203a and 203b of the opening 203, the movement of the core member 204 toward the downstream side is restricted. In contrast, by the sheet member 202, the movement of the core member 204 toward the upstream side is restricted. The core member 204 is thereby retained in the opening 203.

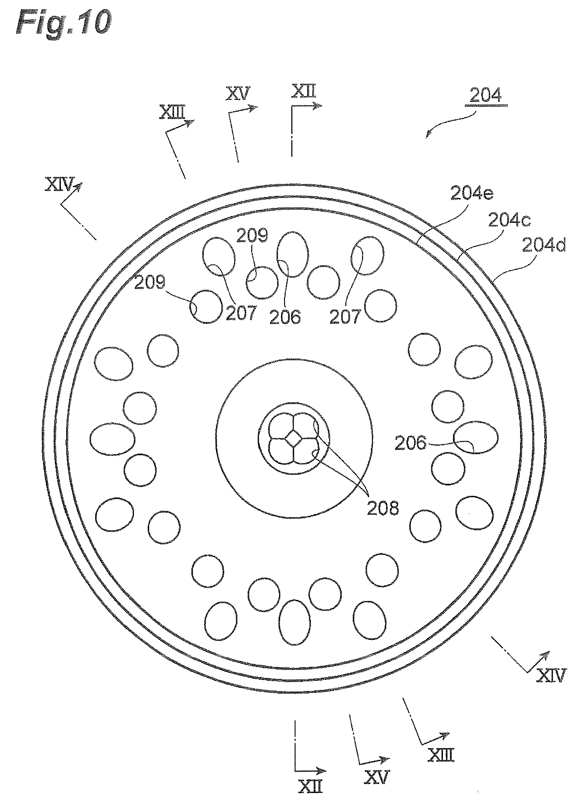

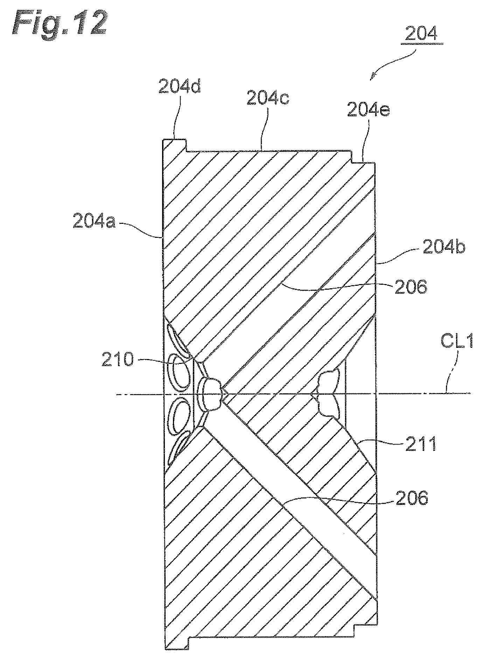

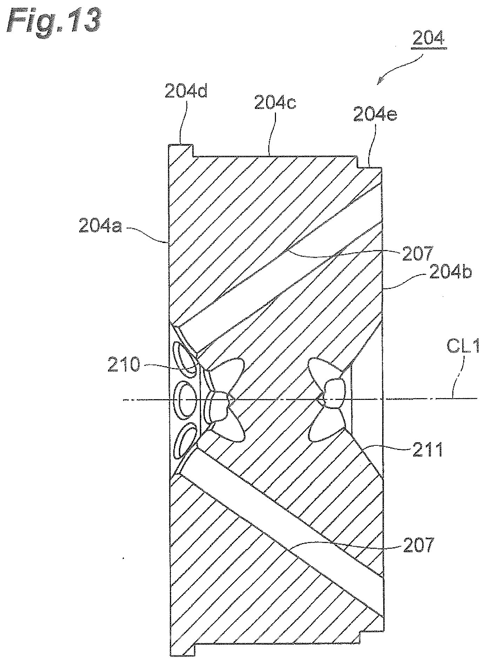

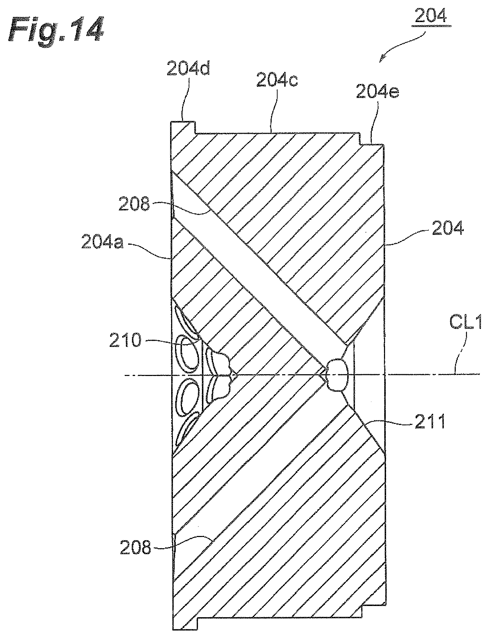

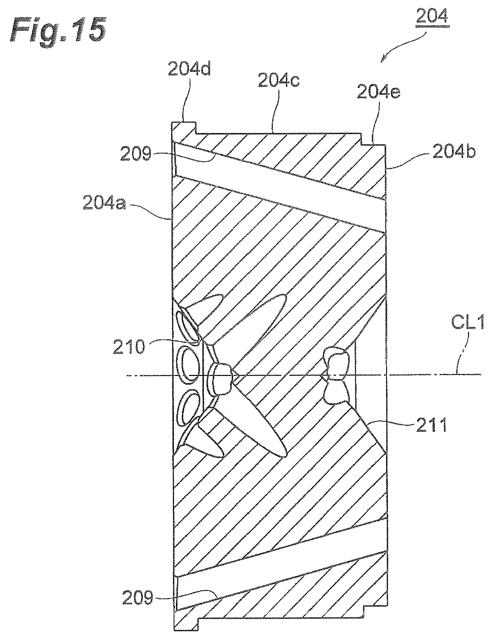

As illustrated in Figure 10 to Figure 15, the core member 204 is formed with inclining through holes 206, 207, 208, and 209 that incline with respect to the central axis CL1. The inner diameters of the inclining through holes 206, 207, 208, and 209 are identical to one another. The inclining through holes 206, 207, 208, and 209 are formed so as not to intersect with one another in the core member 204. Since the core member 204 forms a central portion of the flow adjustment plate 20, the inclining through holes 206, 207, 208, and 209 are positioned close to the center of the flow adjustment plate 20A.

As illustrated in Figure 10, Figure 11, and Figure 12, the inclining through holes 206 is formed at four positions at which a circumference along the outer circumference of the core member 204 is equally divided. Each inclining through hole 206 inclines with respect to the central axis CL1 in a plane including the central axis CL1. The end portion on the upstream side of each inclining through hole 206 is positioned close to the central axis CL1. At the center of the plane 204a on the upstream side, a recessed portion 210 is formed, the inner surface of which assumes a cone shape, and the end portion on the upstream side of each inclining through hole 206 is opened on the inner surface of the recessed portion 210. The end portion on the downstream side of each inclining through hole 206 is positioned close to the outer circumference of the core member 204 and is opened on the plane 204b on the downstream side. In such a manner, each inclining through hole 206 is formed so as to approach the central axis CL1 as extending from the downstream side to the upstream side.

As illustrated in Figure 10, Figure 11, and Figure 13, the inclining through holes 207 are formed at eight positions at which a circumference along the outer circumference of the core member 204 is equally divided. Each inclining through hole 207 inclines with respect to the central axis CL1 in a plane including the central axis CL1. The end portion on the upstream side of each inclining through hole 207 is positioned close to the central axis CL1 and is opened on the inner surface of the recessed portion 210. The end portion on the downstream side of each inclining through hole 207 is positioned close to the outer circumference of the core member 204 and is opened on the plane 204b. In such a manner, each inclining through hole 207 is formed so as to approach the central axis CL1 as extending from the downstream side to the upstream side.

The end portions on the upstream side of the inclining through holes 207 are positioned on the outer circumference side of the core member 204 as compared with the end portions on the upstream side of the inclining through holes 206, surrounding the end portions on the upstream side of the inclining through holes 206 in the recessed portion 210. The end portions on the downstream side of the inclining through holes 207 are positioned on the outer circumference side of the core member 204 as compared with the end portions on the downstream side of the inclining through holes 206.

As illustrated in Figure 10, Figure 11, and Figure 14, the inclining through holes 208 are formed at four positions at which a circumference along the outer circumference of the core member 204 is equally divided. Each inclining through hole 208 inclines with respect to the central axis CL1 in a plane including the central axis CL1. The end portion on the upstream side of each inclining through hole 208 is positioned close to the outer circumference of the core member 204 and is opened on the plane 204a on the upstream side. The end portion on the downstream side of each inclining through hole 208 is positioned close to the central axis CL1. At the center of the plane 204b on the downstream side, a recessed portion 211 is formed, the inner surface of which assumes a cone shape. The end portion of on the downstream side of each inclining through hole 208 is opened on the inner surface of the recessed portion 211. In such a manner, each inclining through hole 208 is formed so as to approach the central axis CL1 as extending from the upstream side to the downstream side.

As illustrated in Figure 10, Figure 11, and Figure 15, the inclining through holes 209 are formed at 16 positions at which a circumference along the outer circumference of the core member 204 is equally divided. Each inclining through hole 209 inclines with respect to the central axis CL1 in a plane including the central axis CL1 of the core member 204. The end portion on the upstream side of the inclining through hole 209 is positioned close to the outer circumference of the core member 204. The end portion on the downstream side of each inclining through hole 209 is also positioned in the vicinity of the outer circumference of the core member 204 and is positioned close to the central axis CL1 as compared with the end portion on the upstream side. In such a manner, each inclining through hole 209 is formed so as to approach the central axis CL1 as extending from the upstream side to the downstream side.

The end portions on the upstream side of the inclining through holes 209 are positioned on the outer circumference side of the core member 204 as compared with the end portions on the upstream side of the inclining through holes 208. The end portions on the downstream side of the inclining through holes 209 are positioned close to the central axis CL1 as compared with the end portions on the downstream side of the inclining through holes 206 and 207.

According to the present embodiment, the composite material in the channel 18b passes through the through holes 205 or the inclining through holes 206, 207, 208, and 209. Material composition fluxes having passed through the inclining through holes 206, 207, 208, and 209 flow in the channel 32b in directions that incline with respect to the central axis CL1. Bey forming the flows inclining with respect to the central axis CL1, the composite material fluxes are mixed with one another in directions orthogonal to the central axis CL1. For this reason, it is possible to reduce the variations of the composite material in fluidity in the directions orthogonal to the central axis CL1.

Since the inclining through holes 206, 207, 208, and 209 are positioned close to the center of the flow adjustment plate 20A, flows inclining with respect to the central axis CL1 are generated in the central portion of the channel extending from the first pipe 10 toward the second pipe 50. This causes composite material fluxes flowing through the central portion of the channel and composite material fluxes flowing through the periphery of the central portion to be mixed with one another. In an extrusion molding device, the fluidity of a composite material flux flowing through the central portion of the channel tends to be high as compared with the fluidity of a composite material flux flowing through the periphery of the central portion. Therefore, by mixing the composite material flux flowing through the central portion of the channel and the composite material flux flowing through the periphery of the central portion, it is possible to further reduce the variations of the composite material in fluidity in the directions orthogonal to the central axis CL1.

The inclining through holes 206, 207, 208, and 209 are formed so as to approach the central axis CL1 as extending from one end side (the upstream side or the downstream side) to the other end side. For this reason, by composite material fluxes passing through the inclining through holes 206, 207, 208, and 209, flows from the central portion toward the outside of the channel or flows from the outside toward the central portion of the channel are formed. This causes composite material fluxes flowing through the central portion of the channel and composite material fluxes flowing through the periphery of the central portion to be further better mixed with one another. Therefore, it is possible to further reduce the variations of the composite material in fluidity in the directions orthogonal to the central axis CL1.

In particular, the inclining through holes 206 and 207 are formed so as to approach the central axis CL1 as extending from the downstream side toward the upstream side. The inclining through holes 208 and 209 are formed so as to approach the central axis CL1 as extending from the upstream side toward the downstream side. For this reason, by the composite material fluxes flowing through the inclining through holes 206, 207, 208, and 209, both of the flows from the central portion of the channel toward the outside and flows from the outside toward the central portion of the channel are formed. This causes composite material fluxes flowing through the central portion of the channel and composite material fluxes flowing through the periphery of the central portion to be further better mixed with one another. Therefore, it is possible to further reduce the variations of the composite material in fluidity in the directions orthogonal to the central axis CL1.

Note that a plurality of core members 204 can be prepared that differ in inner diameter, number, disposition, or inclining direction of inclining through holes, and can be changed as appropriate in conformity with the composition or the like of composite material. For this reason, it is possible to further reduce the variations of paste in fluidity in the directions orthogonal to the central axis CL1.

The inclining through holes are not necessarily formed close to the center of the flow adjustment plate 20A and can be formed in the main member 201. In addition, a through hole parallel to the central axis CL1 may be formed in the core member 204. The main member 201 and the core member 204 may be undetachably integrated.

### <Extrusion Molding Device According to Fourth Embodiment>

Subsequently, an extrusion molding device according to a fourth embodiment will be described. The extrusion molding device according to the present embodiment is one in which the core member 204 in the third embodiment is replaced with a core member 212. The core member 212 is also for achieving the uniformity of flow rate between the central portion and the periphery of the channel.

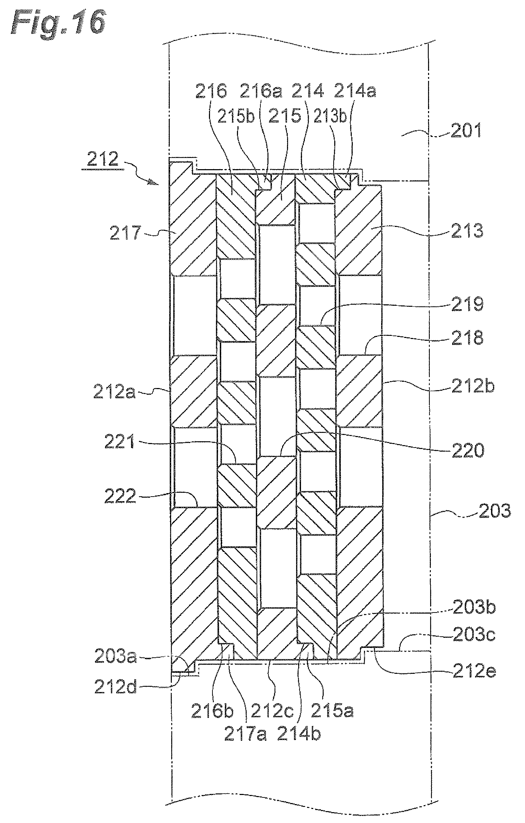

As illustrated in Figure 16 to Figure 21, the core member 212 assumes a disk shape that has a plane 212a facing an upstream side and a plane 212b facing a downstream side. The core member 212 includes a fitted portion 212c that is fitted to the hole portion 203b of the opening 203, a large-diameter portion 212d that is adjacent to the fitted portion 212c on a plane 212a side, and a small-diameter portion 212e that is adjacent to the fitted portion 212c on a plane 212b side. The large-diameter portion 212d, which is large in outer diameter as compared with the fitted portion 212c, is housed in the hole portion 203a on the upstream side of the opening 203. The small-diameter portion 212e, which is small in outer diameter as compared with the fitted portion 212e, is inserted into the hole portion 203c on the downstream side of the opening 203.

By the fitted portion 212c being fitted to the hole portion 203b, the position of core member 212 in a direction orthogonal to the central axis CL1 is determined. By the large-diameter portion 212d being caught on the boundary portions of the hole portions 203a and 203b of the opening 203, the movement of the core member 212 toward the downstream side is restricted. In contrast, by the sheet member 202, the movement of the core member 212 toward the upstream side is restricted. The core member 212 is thereby retained in the opening 203.

The core member 212 is formed by round-shaped stacked plates 213, 214, 215, 216, and 217 that are stacked from the downstream side to the upstream side along the central axis CL1. The large-diameter portion 212d is provided in the stacked plate 217 on the upstream side. The small-diameter portion 212e is provided in the stacked plate 213 on the downstream side. At the outer edge portions on the downstream side faces of the stacked plates 214, 215, 216, and 217, but not of the stacked plate 213 on the downstream side, projections 214a, 215a, 216a, and 217a are formed that project on the downstream side. At the outer edge portions on the upstream side face of the stacked plates 213, 214, 215, and 216, but not of the stacked plate 217 on the upstream side, recessed portions 213b, 214b, 215b, and 216b are formed that correspond to the projections 214a, 215a, 216a, and 217a, respectively. By the projections 214a, 215a, 216a, and 217a being fitted to the recessed portions 213b, 214b, 215b, and 216b, respectively, the relatively rotational movements between the stacked plates 213, 214, 215, 216, and 217 are prevented. This determines the relative positions between through holes 218, 219, 220, 221, and 222 to be described later. The stacked plates 213, 214, 215, 216, and 217 are fastened to each other by a bolt or the like.

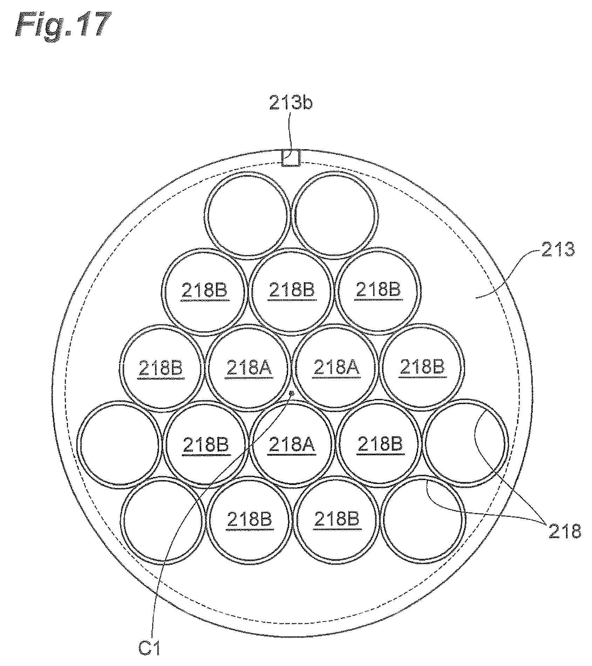

As illustrated in Figure 16 and Figure 17, in the stacked plate 213 that is the closest to the downstream side, 18 through holes 218 are formed. Among them, three through hole 218A are disposed so as to surround a center C1 of the stacked plate 213. With the three through holes 218A centered, the other through holes 218 are disposed in an equilateral triangle grid pattern. The end portion on the upstream side of each through hole 218 is subjected to chamfering.

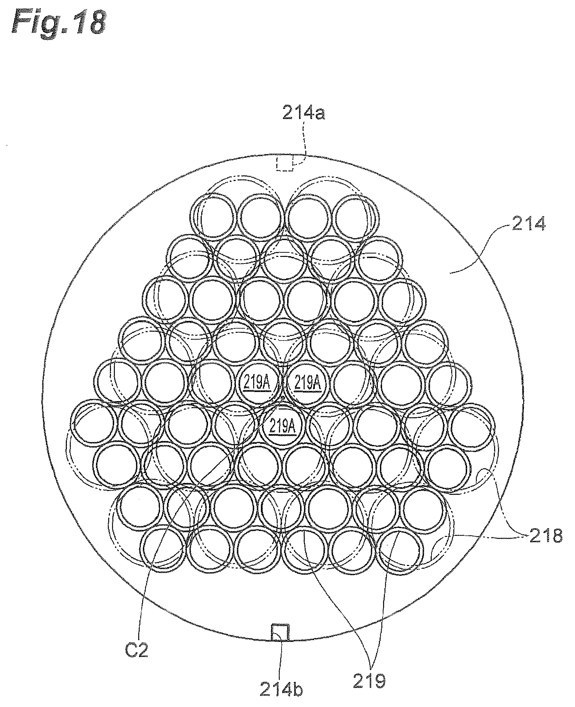

As illustrated in Figure 16 and Figure 18, in the stacked plate 214 adjacent to the stacked plate 213 on the upstream side, 60 through holes 219 are formed. Among them, three through holes 219A are disposed so as to surround a center C2 of the stacked plate 214. With the three through holes 219A centered, the other through holes 219 are disposed in an equilateral triangle grid pattern. The inner diameter of each through hole 219 is small as compared with the inner diameter of the through holes 218 of the stacked plate 213. The end portion on the upstream side of each through hole 219 is subjected to chamfering. All the through holes 219 are connected to the through holes 218 of the stacked plate 213, and there are some through holes 219 which are connected to a plurality of through holes 218. Each through hole 218 of the stacked plate 213 is connected to a plurality of through holes 219.

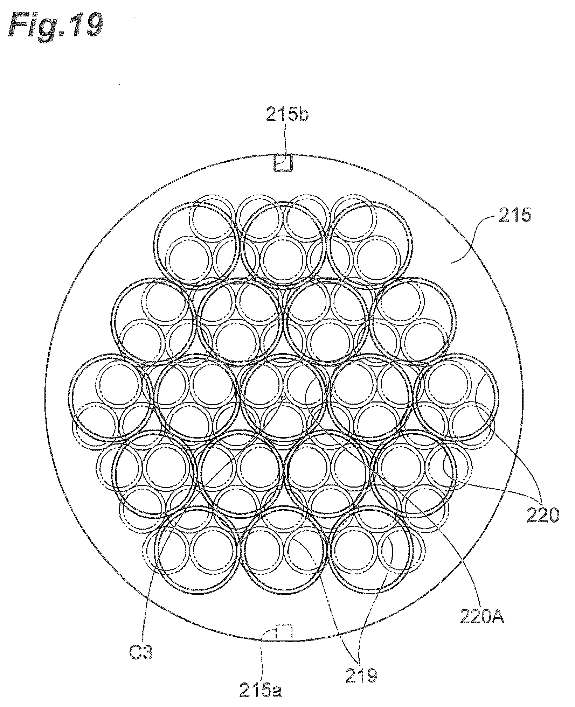

As illustrated in Figure 16 and Figure 19, in the stacked plate 215 adjacent to the stacked plate 214 on the upstream side, 19 through holes 220 are formed. One of the through holes 220A is disposed at a center C3 of the stacked plate 215. With the through hole 220A centered, the other through holes 220 are disposed in an equilateral triangle grid pattern. The inner diameter of each through hole 220 is larger than the inner diameter of the through holes 219 of the stacked plate 214 and equal to the inner diameter of the through holes 218 of the stacked plate 213. The end portion on the upstream side of each through hole 220 is subjected to chamfering. Each through hole 220 is connected to a plurality of through holes 219 of the stacked plate 214. All the through holes 219 of the stacked plates 214 are connected to the through holes 220, and there are some through holes 219 each of which is connected to a plurality of through holes 220.

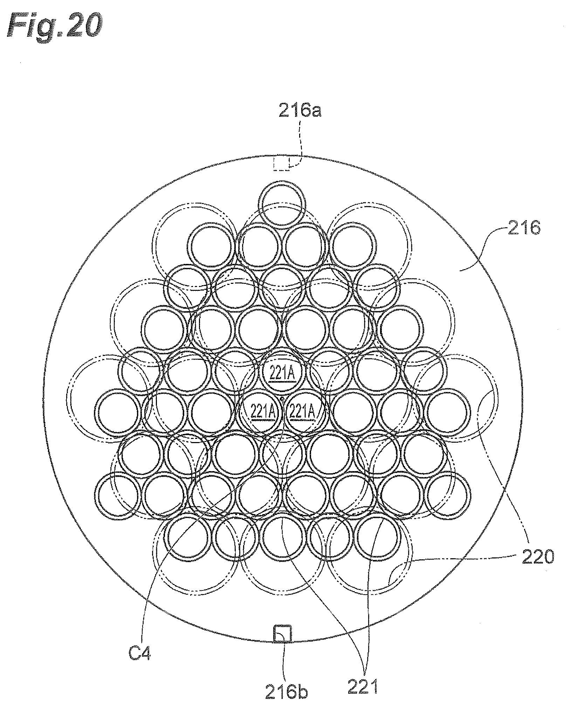

As illustrated in Figure 16 and Figure 20, in the stacked plate 216 adjacent to the stacked plate 215 on the upstream side, 51 through holes 221 are formed. Among them, three through holes 221A are disposed so as to surround a center C4 of the stacked plate 216. With the three through holes 221A centered, the other through holes 221 are disposed in an equilateral triangle grid pattern. The inner diameter of each through hole 221 is small as compared with the inner diameter of the through holes 218 and 220 of the stacked plates 213 and 215 and equal to the inner diameter of the through holes 219 of the stacked plate 214. The end portion on the upstream side of each through hole 221 is subjected to chamfering. All the through holes 221 are connected to the through holes 220 of the stacked plate 215, and there are some through holes 221 each of which is connected to a plurality of through holes 220. Each through hole 220 of the stacked plate 215 is connected to a plurality of through holes 221.

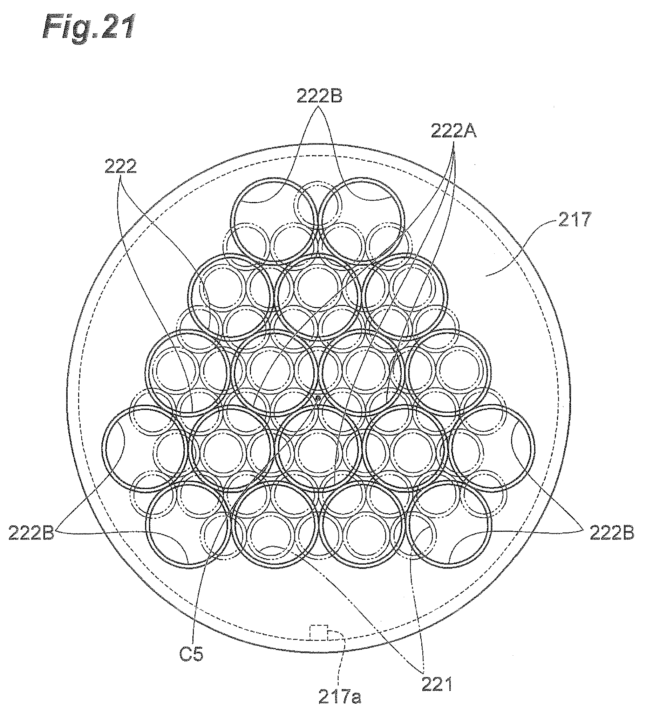

As illustrated in Figure 16 and Figure 21, in the stacked plate 217 that is the closest to the upstream side, 18 through holes 222 are formed. Among them, three through holes 222A are disposed so as to surround a center C5 of the stacked plate 217. With the three through holes 222A centered, the other through holes 222 are disposed in an equilateral triangle grid pattern. That is, the through holes 222 are disposed as with the through holes 218 of the stacked plate 213 that is the closest to the downstream side. The inner diameter of each through hole 222 is large as compared with the inner diameter of the through holes 219 and 221 of the stacked plates 214 and 216 and equal to the inner diameter of the through holes 218 and 220 of the stacked plates 213 and 215. The end portion on the upstream side of each through hole 222 is subjected tao chamfering. Each through hole 222 is connected to a plurality of through holes 221 of the stacked plate 216. All the through holes 221 of the stacked plate 216 are connected to the through holes 222, and there are some through holes 221 each of which is connected to a plurality of through holes 222. In addition, in the stacked plate 213, each of nine through holes 218B surrounding the three through hole 218A closest to a center C1 side is connected to the through holes 222A and 222B that are closest to a center C5 side and closest to an outer edge side, respectively, of the stacked plate 217, via the through holes 219, 220, and 221 of the stacked plates 214, 215, and 216.

According to the present embodiment, composite material in the channel 18b flows into the through holes 205 or the through holes 222. Composite material fluxes flowing into the through holes 222 flow into the through holes 221 connected to the through holes 222. Since each through hole 222 is connected to a plurality of through holes 221, a composite material flux having passed through each through hole 222 is separated and flows into a plurality of through holes 221. Since there are some through holes 221 each of which is connected to a plurality of through holes 222, the composite material fluxes flow from a plurality of through holes 222 into the through hole 221 and merge with one another.

The composite material flowing into the through holes 221 flows into the through holes 220 connected to the through holes 221. Since there are some through holes 221 each of which is connected to a plurality of through holes 220, a composite material flux having passed through the through hole 221 is separated and flows into a plurality of through holes 220. Since each through hole 220 is connected to a plurality of through holes 221, composite material fluxes flow from a plurality of through holes 221 into each through hole 220 and merge with one another.

The composite material flowing into the through hole 220 flows into the through holes 219 connected to the through holes 220. Since each through hole 220 is connected to a plurality of through holes 219, a composite material flux having passed through each through hole 220 is separated and flows into a plurality of through holes 219. Since there are some through holes 219 each of which is connected to a plurality of through holes 220, composite material fluxes flow from a plurality of through holes 220 into the through hole 219 and merge with one another.

The composite material flowing into the through holes 219 flows into the through holes 218 connected to the through holes 219. Since there are some through holes 219 each of which is connected to a plurality of through holes 218, a composite material flux having passed through the through hole 219 is separated and flow into a plurality of through holes 218. Since each through hole 218 is connected to a plurality of through holes 219, composite material fluxes flow from a plurality of through holes 219 into each through hole 218 and merge with one another.

In such a manner, the separation and merging of composite material occur in the course of passing through the five stacked plates 217, 216, 215, 214, and 213, which causes composite material fluxes to be mixed with one another in directions orthogonal to the central axis CL1. For this reason, it is possible to reduce the variations of composite material in fluidity in the directions orthogonal to the central axis CL1.

Each of the stacked plates 213, 214, 215, 216, and 217 is disposed at the center of the flow adjustment plate 20A. This causes the separation and merging of the composite material in the central portion of the channel, and composite material fluxes flowing through the central portion of the channel and composite material fluxes flowing through the periphery of the central portion are mixed with one another. As described above, the fluidity of a composite material flux flowing through the central portion of the channel tends to be high as compared with the fluidity of a composite material flux flowing through the periphery of the central portion. Therefore, by mixing the composite material flux flowing through the central portion of the channel and the composite material flux flowing through the periphery of the central portion, it is possible to further reduce the variation of the composite material in fluidity in the directions orthogonal to the central axis CL1,

The through holes 21 sub formed in the stacked plate 213 on the downstream side are connected to the plurality of through holes 222A and 222B that are formed closest to the center C5 side and closest to the outer edge side, respectively, of the stacked plate 217 on the upstream side, via the through holes 219, 220, and 221 formed in the stacked plates 214, 215, and 216 in the middle. For this reason, composite material fluxes flowing into the through holes 222A formed closest to the center C5 side in the stacked plate 217 on the upstream side and composite material fluxes flowing into the through holes 222B formed closest to the outer edge side in the stacked plate on the upstream side flow one of the through holes 218 of the stacked plate 213 on the downstream side and merge with one another. This causes composite material fluxes flowing through the central portion of the channel and composite material fluxes flowing through the periphery of the central portion to be further better mixed with one another. Therefore, it is possible to further reduce the variations of the composite material in fluidity in the directions orthogonal to the central axis CL1.

In the stacked plates 214 and 216 in the middle, the through holes 219 and 221 are formed that are smaller in inner diameter and larger in number as compared to the through holes 218 and 222 of the stacked plates 213 and 217 on the upstream side and the downstream side. For this reason, the separation and merging of the composite material occur at more spots, which causes composite material fluxes to be further better mixed with one another in the directions orthogonal to the central axis CL1. Therefore, it is possible to further reduce the variations of composite material in fluidity in the directions orthogonal to the central axis CL1.

Note that, a plurality of core members 212 can be prepared that differ in number of stacked plates, or in inner diameter, number, or disposition of the through holes of each stacked plate, and can be changed as appropriate in conformity with the composition or the like of composite material. For this reason, it is possible to further reduce the variations of composite material in fluidity in the directions orthogonal to the central axis CL1.

The stacked plates are not necessarily disposed at the center of the flow adjustment plate 20A and may be disposed at a decentered position. In addition, the flow adjustment plate 20A is not necessarily divided into the main member 201 and the core member 212, and the entire flow adjustment plate 20A may be formed by stacked plates.

The embodiments have been described above in detail, but the present invention is not limited to the above embodiments. For example, in the above embodiments, the description has been made about, by way of example, the aspect in which the first pipe 10 includes the extended portion 14, the tapered portion 16, and the adjustment plate fixing section 18, but the embodiments can be practiced even if the flows adjustment plate 20 or 20A is provided in the outlet of the barrel portion 12. That is, the form of the first pipe 10 is not specially limited, and one or more screws may be disposed on an upstream side and the flow adjustment plate 20 or 20A may be disposed on the upstream side of the second pipe 50. Note that, when the first pipe 10 includes the tapered portion 16 the inner diameter of which is expanded as compared with the barrel portions 12, there is an advantage that a molded body having a diameter larger than the inner diameter of the channel 12b can be manufactured.

In addition, in the above embodiments, the second pipe 50 includes the fourth portion 38 and the fifth portion 40 but may not include the fourth portion 38 and the fifth portion 40, and the die 90 may be directly fastened in the outlet of the third portion 36. In addition, the second pipe 50 may include another tubular portion, other than the fourth portion 38 and the fifth portion 40, on the downstream side of the third portion 36.

In addition, the form of the flow adjustment plate 20, and the structure for fastening the flow adjustment plate 20 or 20A between the first pipe 10 and the second pipe 50 are not specially limited.

In addition, the structures of the hydraulic clamp 60 and the magnet clamp 80 according to the above embodiments, the structures for attaching the hydraulic clamp 60 or the magnet clamp 80 to the first pipe 10, and the clamp structure between them and the second pipe 50 are not limited to the above embodiments.

In addition, in the above embodiments, the hydraulic clamp 60 and the magnet clamp 80 are described by way of example, but the above embodiments can be practiced also by fastening the first pipe 10 and the first portion 32 of the second pipe 50 by the other fastening methods such as using a screw.

Also the cross-sectional shape of the channel of the first pipe 10 and the second pipe 50 is not limited to a circle, and may be an ellipse or a polygon. In this case, the inner diameter of the channel can be expressed as a circle equivalent diameter.

In addition, in the above embodiments, the cylindrical green honeycomb molded body 70 is described by way of example, but the shape and the structure of a molded body molded by the die 90 are not limited to this. The exterior shape of the green honeycomb molded body 70 may be, for example, a prism such as a quadrangular prism, or an elliptic cylinder. In addition, the disposition of the through holes 71a and 71b are not specially limited. For example, the disposition may not be an equilateral triangular disposition and may be, for example, a square disposition, a hexagonal disposition, or the like. Furthermore, also the shapes of the through holes 71a and 71b may not be hexagons, and may be, for example, triangles, quadrilaterals, octagons, round shapes, and the combinations thereof.

### Industrial Applicability

The present invention is applicable to the manufacture of a green honeycomb molded body.

### Reference Signs List

- 1: extrusion molding device
- 2A, 2B: screw
- 10: first pipe
- 20, 20A: flow adjustment plate
- 32: first portion
- 34: second portion
- 35a, 35b, 35c: region
- 36: third portion
- 50: second pipe
- 60: hydraulic clamp
- 70: green honeycomb molded body
- 80: magnet clamp
- 90: die
- 201: main member
- 203: opening
- 204, 212: core member
- 206, 207, 208, 209: inclining through hole
- 212: core member
- 213, 214, 215, 216, 217: stacked plate
- 218, 219, 220, 221, 222: through hole
- CL1: central axis

## Claims

1. An extrusion molding device, comprising:
a first pipe;
a screw that is provided in the first pipe;
a second pipe that is connected to an outlet of the first pipe;
a flow adjustment plate that is disposed between the first pipe and the second pipe; and
a die that is connected to an outlet of the second pipe, wherein
the second pipe includes, in order from a side of the first pipe, a first portion having a constant inner diameter, a second portion having an inner diameter that decreases as the second portion extends from the first portion, and a third portion having a constant inner diameter, and
the second portion is undetachably integrated with the first portion, and the third portion is undetachably integrated with the second portion.

2. The extrusion molding device according to claim 1, wherein
the inner surface of the second portion includes a slope inclining such that the inner diameter gradually decreases as the second portion extends from an upstream side to a downstream side, and an inclination angle of the inner surface of the second portion with respect to a central axis of the second portion decreases stepwise as the second portion extends from the upstream side to the downstream side.

3. The extrusion molding device according to claim 1, further comprising:
a hydraulic clamp or a magnet clamp that fastens the second pipe and the first pipe in a detachable manner.

4. The extrusion molding device according to any one of claims 1 to 3, wherein
in the flow adjustment plate, an inclining through hole is formed, the inclining through hole inclining with respect to a central axis of a channel that runs from the first pipe toward the second pipe.

5. The extrusion molding device according to claim 4, wherein
the inclining through hole is formed close to a center of the flow adjustment plate.

6. The extrusion molding device according to claim 5, wherein
the inclining through hole is formed so as to approach the central axis as extending from one end side toward another end side.

7. The extrusion molding device according to claim 6, wherein
in the flow adjustment plate, a plurality of inclining through holes including the inclining through hole are formed,
some of the inclining through holes are formed so as to approach the central axis as extending from an upstream side toward a downstream side, and
others of the inclining through holes are formed so as to approach the central axis as extending from the downstream side toward the upstream side.

8. The extrusion molding device according to any one of claims 4 to 7, wherein
the flow adjustment plate includes a main member that has an opening at a center, and a core member that is disposed in the opening, and
the inclining through hole is formed in the core member.

9. The extrusion molding device according to any one of claims 1 to 3, wherein
the flow adjustment plate includes a plurality of stacked plates that are stacked along a central axis of a channel that runs from the first pipe toward the second pipe,
in each of the stacked plates, a plurality of through holes are formed, and
the through holes in each of the stacked plates are connected to a plurality of the through holes that are formed in the stacked plate adjacent to the each of the stacked plates.

10. The extrusion molding device according to claim 9, wherein
each of the stacked plates is disposed at a center of the flow adjustment plate.

11. The extrusion molding device according to claim 10, wherein
the plurality of stacked plates include a stacked plate on an upstream side, a stacked plate on a downstream side, and a middle stacked plate that is disposed between the stacked plates on the upstream side and the downstream side, and
the through holes formed in the stacked plate on the downstream side are connected to a plurality of the through holes that are formed closest to a center side and closest to an outer edge side of the stacked plate on the upstream side, via the through holes formed in the middle stacked plate.

12. The extrusion molding device according to claim 10 or 11, wherein
the flow adjustment plate includes a main member that has an opening at a center, and a core member that is disposed in the opening, and
the plurality of stacked plates form the core member.

13. The extrusion molding device according to any one of claims 9 to 12, wherein
the plurality of stacked plates include a stacked plate on an upstream side, a stacked plate on a downstream side, and a middle stacked plate that is disposed between the stacked plates on the upstream side and the downstream side, and
in the middle stacked plate, the through holes are formed that are smaller in inner diameter and larger in number as compared with the through holes of the stacked plates on the upstream side and the downstream side.

14. The extrusion molding device according to any one of claims 1 to 13, wherein
the second pipe further includes a fourth portion that is positioned on a downstream side of the third portion, and
in the fourth portion, a rod that projects from an inner surface of the fourth portion toward a center side, and an actuator that adjusts a projecting length of the rod from the inner surface of the fourth portion, are provided.

15. A method for manufacturing a green honeycomb molded body, comprising:
a step of extruding a ceramic material using an extrusion molding device, to obtain the green honeycomb molded body, wherein
the extrusion molding device is the extrusion molding device according to any one of claims 1 to 14.
